# EUROPÄISCHE PATENTANMELDUNG

(11) **EP 1 166 677 A1**
(43) Veröffentlichungstag der Anmeldung: **02.01.2002**
(21) Anmeldenummer: 01114007.6
(22) Anmeldetag: 08.06.2001
(51) Int. Cl.: A47B 21/00

(54) **Tischsteckdose**

(30) Priorität: 20.06.2000 DE 10030230
(71) Anmelder: A. & H. Meyer GmbH Leuchten und Büroelektrik, 32694 Dörentrup (DE)
(72) Erfinder: Meyer, Horst, 32694 Dörentrup (DE)
(74) Vertreter: Hanewinkel, Lorenz

(57) **Zusammenfassung**

Tischsteckdose mit einem an einer Tischplatte oder sonstigen Arbeitsfläche lösbar anzubringenden Gehäuse, in dem wenigstens eine Netz- und/oder Datensteckdose, insbesondere für Computer oder Telefon, angeordnet ist, dadurch gekennzeichnet, daß das Gehäuse an einer an beliebiger Stelle der Tischplatte oder Arbeitsfläche lösbar anbringbaren Befestigungseinrichtung lösbar gehalten ist.

## Beschreibung

Die Erfindung betrifft eine Tischsteckdose mit einem an einer Tischplatte oder sonstigen Arbeitsfläche lösbar anzubringenden Gehäuse, in dem wenigstens eine Netzstrom- und/oder Datensteckdose, insbesondere für Computer oder Telefon, angeordnet ist.

Aus der DE 4437220 ist eine Netzanschlußeinheit mit wenigstens einer Steckdose in einem Gehäuse bekannt, wobei das Gehäuse lösbar an einer Arbeitsplatte befestigbar ist, so daß die Steckdosen oberhalb der Arbeitsplatte manuell zugänglich sind, wobei das Gehäuse zum Umgreifen eines Randes der Arbeitsplatte im Querschnitt etwa U-förmig ist und die Steckdosen in der Vorderwand des oberen U-Schenkels des Gehäuses angeordnet sind.

Das hat den Nachteil, daß bei Zusammenstellung mehrerer benachbarter Tische entlang deren Seitenkanten die Anbringung derartiger Netzanschlußeinheiten schwierig sein kann, da bestimmte Kanten nicht zugänglich sind.

Die Aufgabe der Erfindung besteht darin, eine Tischsteckdose zu schaffen, die auch bei entlang deren Seitenkanten zusammengestellten Tischen problemlos verwendbar ist.

Die Aufgabe wird durch eine Tischsteckdose nach Anspruch 1 gelöst. Vorteilhafte Ausgestaltungen der Erfindung sind in den Unteransprüchen aufgezeigt.

Die Erfindung wird nachfolgend anhand zweier Ausführungsbeispiele weiter erläutert, wobei auf eine Zeichnung Bezug genommen ist, in der
- Fig. 1: eine Seitenansicht einer an einer Tischplatte befestigten erfindungsgemäßen Tischsteckdose gemäß einer ersten Ausführungsform zeigt,
- Fig. 2: eine perspektivische Ansicht einer Befestigungsmutter zeigt,
- Fig. 3: eine stirnseitige Seitenansicht der Tischsteckdose zeigt, wobei ein Teilbereich im Schnitt dargestellt ist,
- Fig. 4: ausschnittsweise eine Rückansicht, teilweise im Schnitt, der montierten Tischsteckdose mit Zugentlastung zeigt,
- Fig. 5: in einer Darstellung entsprechend Fig. 4 eine Variante einer Zugentlastung zeigt,
- Fig. 6a bis c: die Öffnung der Tischplatte im freien und geschlossenen Zustand zeigen,
- Fig. 7: in Bezug auf eine zweite Ausführungsform eine Draufsicht auf eine Befestigungsplatte zeigt,
- Fig. 8: eine Schnittansicht der Befestigungsplatte entlang Linie VIII-VIII in Fig. 7 zeigt,
- Fig. 9: eine Schnittansicht der Befestigungsplatte entsprechend Linie IX-IX in Fig. 7 zeigt,
- Fig. 10: eine Draufsicht auf ein Sicherungselement zeigt,
- Fig. 11: eine stirnseitige Ansicht des Sicherungselements nach Fig. 10 zeigt,
- Fig. 12: eine Seitenansicht des Sicherungselements zeigt, und
- Fig. 13: in einer teilweise im Schnitt dargestellten Seitenansicht die Befestigung der Tischsteckdose gemäß der zweiten Ausführungsform zeigt.

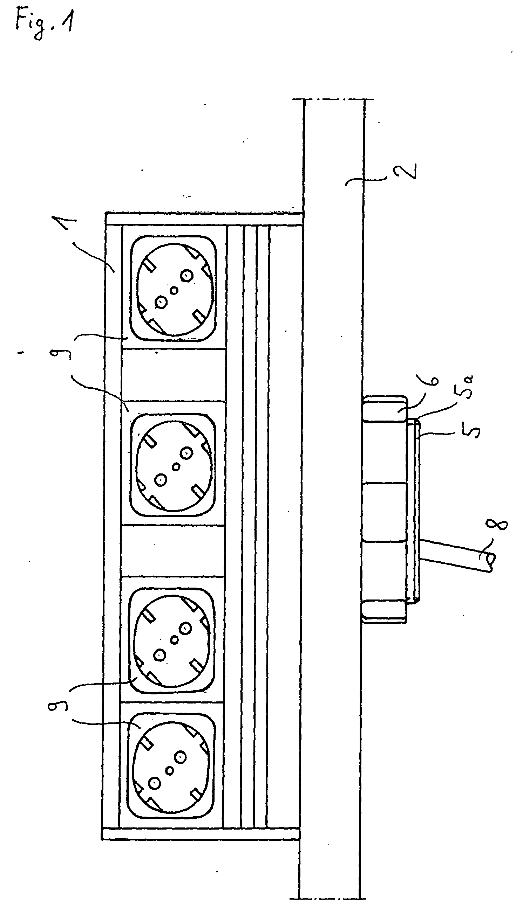

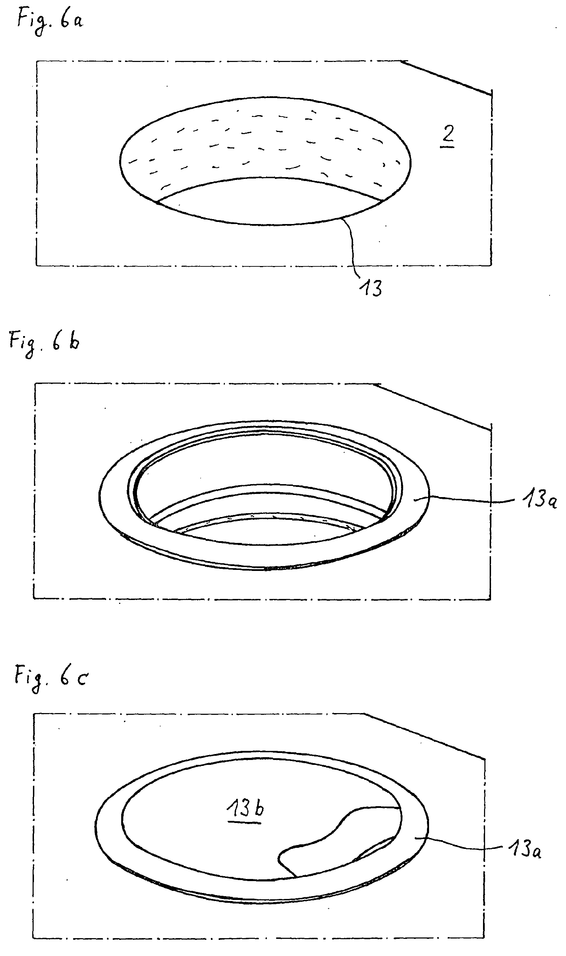

Zunächst sei auf Fig. 1 bis 3 Bezug genommen, aus denen Aufbau und Befestigung eines ersten Ausführungsbeispiels der erfindungsgemäßen Tischsteckdose hervorgeht. Fig. 1 zeigt eine Seitenansicht der Tischsteckdose, bei der in einem länglichen Gehäuse 1 eine Reihe von einzelnen Steckdosen 9 angeordnet ist, bei denen es sich um Netzstrom- bzw. zusätzlich oder alternativ auch um Datensteckdosen handeln kann, beispielsweise für Computer- oder Telekommunikationsanwendungen. Das Gehäuse 1 liegt mit seiner ebenen Unterseite auf einer Tischplatte 2 auf, die im mittleren Bereich des Gehäuses eine in Fig. 6 dargestellte, runde Öffnung aufweist, welche üblicherweise bei Büroschreibtischen usw. als Kabelauslaß dient und bei Nichtbenutzung mit einem Kunststoffdeckel 13b verschlossen ist.

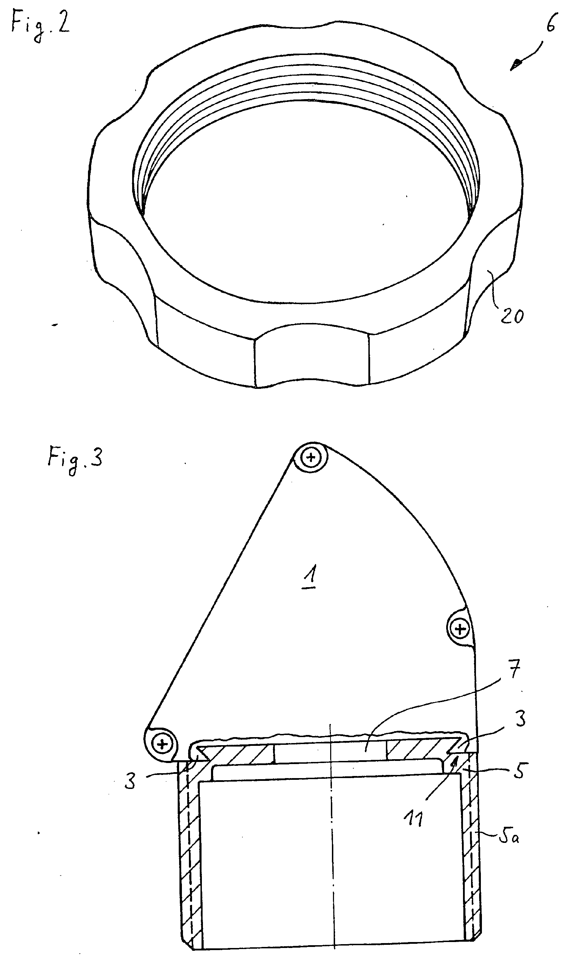

Wie Fig. 3 zeigt, ist das Gehäuse 1 mit einer hohlzylindrischen Befestigungshülse 5 verbunden, die durch die genannte Öffnung der Tischplätte 2 hindurchgreift und mittels einer auf der dem Gehäuse 1 gegenüberliegenden Seite der Tischplatte 2 angeordneten Befestigungsmutter 6, die mit einem Außengewinde 5a der Befestigungshülse 5 zusammenwirkt, eine stabile Befestigung der Tischsteckdose an der Tischplatte ermöglicht.

Fig. 2 zeigt die Befestigungsmutter 6 in einer perspektivischen Darstellung, wobei ersichtlich ist, daß die Befestigungsmutter 6 auf ihrem äußeren Umfang mit einer Anzahl von Griffmulden 20 versehen ist, die eine werkzeuglose manuelle Befestigung der Tischsteckdose ermöglichen.

Wie Fig. 3 weiter zeigt, weist die Befestigungshülse 5 an ihrem dem Gehäuse 1 benachbarten Endabschnitt eine Durchführungsöffnung 7 für Kabel 8 auf. Ferner ist die Befestigungshülse 5 mittels einer Schwalbenschwanzführung mit dem Gehäuse 1 verbunden, und kann zur Montage in Längsrichtung, d.h. in Fig. 1 von links bzw. rechts in das Gehäuse eingeschoben werden. Hierfür ist das Gehäuse 1 an seiner Unterseite mit zwei parallelen, beabstandeten Führungsschienen 3 versehen, wobei die Befestigungshülse 5 an ihrem oberen Endabschnitt entsprechende parallele, beabstandete Führungsnuten 11 aufweist, die zur Aufnahme der Führungsschienen 3 dienen. Da das Gehäuse 1 mit seiner ebenen Unterseite auf der Tischplatte 2 aufliegt, erfolgt durch Anziehen der Befestigungsmutter 6 gleichzeitig ein Festspannen eines Gehäuses, so daß dieses in seiner gewünschten Position fixiert ist.

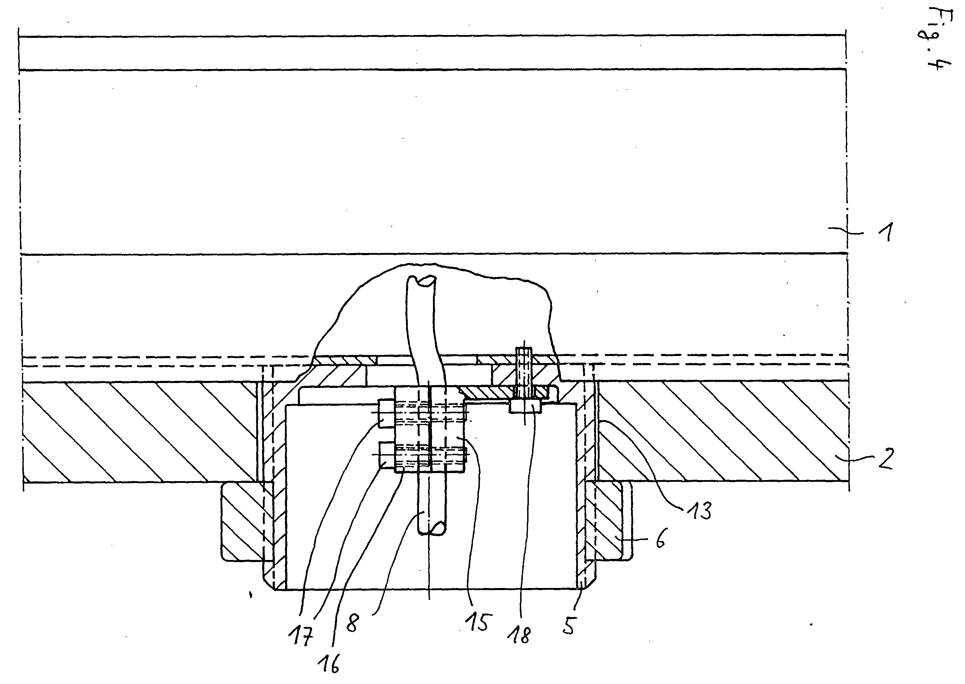

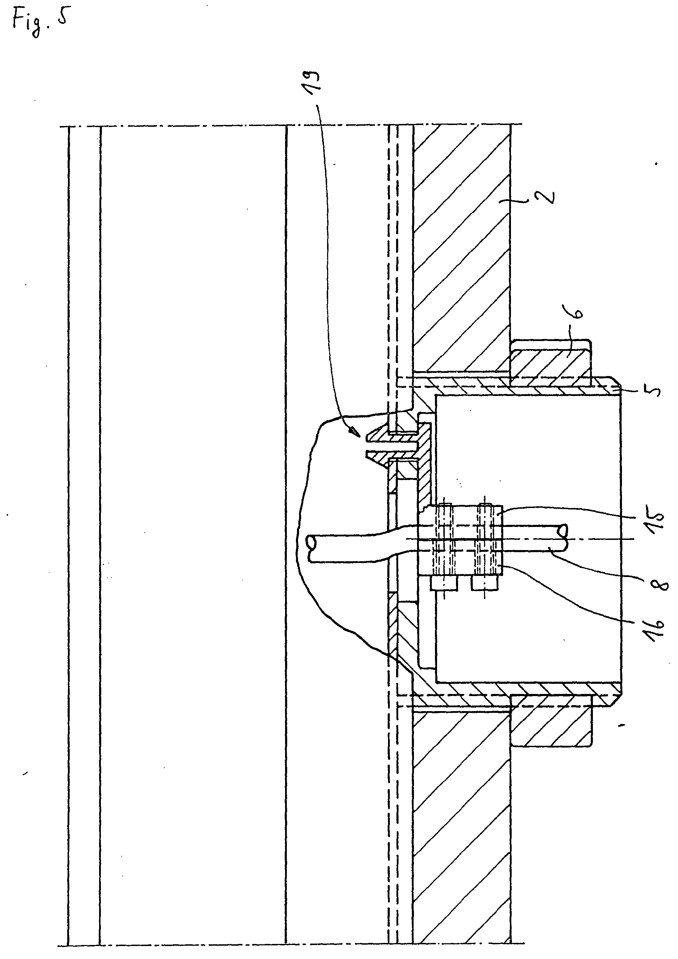

Fig. 4 und 5 zeigen den Befestigungsbereich der Tischsteckdose im einzelnen, wobei insbesondere die Lage der Befestigungshülse 5 innerhalb der Öffnung 13 der Tischplatte 2 sowie die Befestigung der Befestigungsmutter 6 und die Durchführung eines Kabels 8 durch das hohle Innere der Befestigungshülse 5, deren Durchgangsöffnung 7 sowie durch eine Gehäuseöffnung 20 deutlich sichtbar sind. Ferner zeigen Fig. 4 und 5 zwei Varianten einer Zugentlastung für ein Kabel 8. In beiden Fällen ist ein L-förmiges Zugentlastungsteil 15 im Bereich des oberen Endabschnittes der Befestigungshülse 5 fixiert, wobei das Kabel 8 durch ein mit zwei Schrauben 17 befestigtes Klemmteil 16 an einem freien Schenkel des L-förmigen Zugentlastungsteils 15 klemmend fixiert ist. Das Zugentlastungsteil 15 ist seinerseits entweder mit einer mit der Befestigungshülse und dem Gehäuse zusammenwirkenden Schraube 18 (Fig. 4) oder einem mit Befestigungshülse und Gehäuse verrastbaren Steckverbinder 19 (Fig. 5), der einteilig mit dem Zugentlastungsteil 15 ausgebildet sein kann, fixiert. Nach Einschrauben der Schraube 18 bzw. Einrasten des Steckverbinders 19 wird gleichzeitig eine Verschiebung das Gehäuse 1 relativ zu der Befestigungshülse 5 entlang der Schwalbenschwanzführung 3, 11 verhindert und dadurch eine vorzugsweise mittige Position des Gehäuses 1 an der Befestigungshülse 5 bzw. über der Öffnung 13 der Tischplatte festgelegt.

Fig. 6a bis c zeigen erläuterungshalber in einer perspektivischen Ansicht die Öffnung 13 der Tischplatte 2 (Fig. 6a), wobei die Öffnung in ihrer üblichen Funktion vorzugsweise als Kabelauslaß mit einer Zierblende 13a (Fig. 6b) abgedeckt und im Falle der Nichtbenutzung mit einem Deckel 13b (Fig. 6c) verschlossen ist.

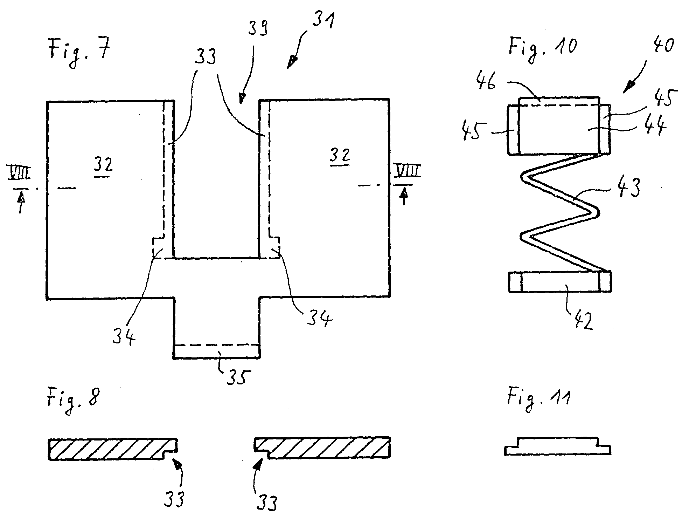

Fig. 7 bis 13 dienen der Erläuterung einer zweiten Ausführungsform der Erfindung, die es ermöglicht, eine Tischsteckdose in erfindungsgemäßer Weise an einer beliebigen Stelle einer Tischplatte oder Arbeitsplatte anzubringen, ohne daß hierfür eine Öffnung in der Tischplatte vorhanden sein muß.

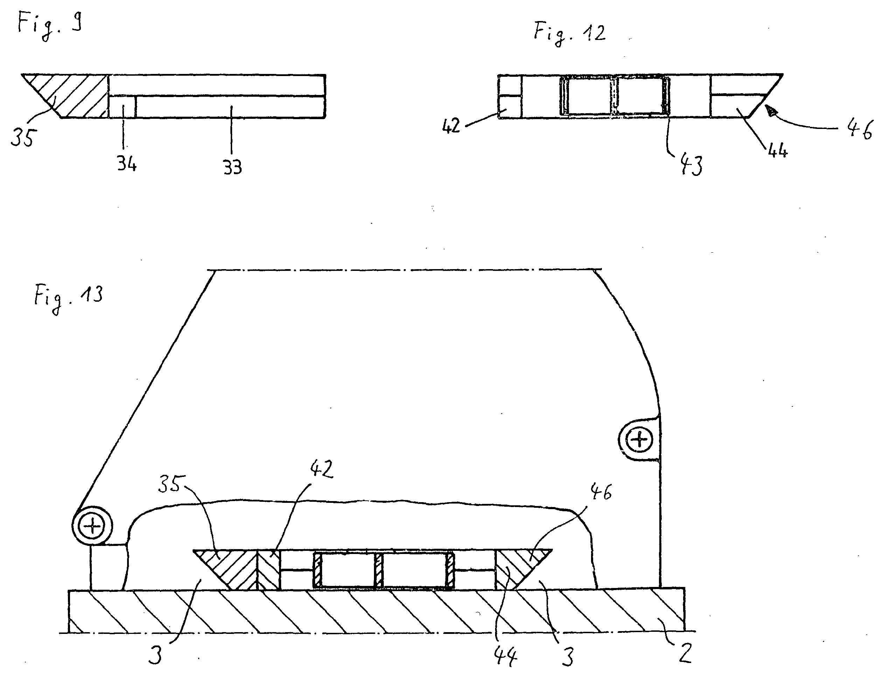

Zunächst sei auf Fig. 7 bis 12 Bezug genommen, die eine zweiteilige Befestigungseinrichtung zur lösbaren Anbringung der Tischsteckdose zeigen. Fig. 7 bis 9 zeigen eine ebene Befestigungsplatte 31, die an Befestigungsbereichen 32 lösbar an der Tischplatte anzubringen ist, und zwar entweder durch Schrauben oder aber vorzugsweise ohne Beschädigung der Tischplatte mittels beidseitig klebenden und vorzugsweise rückstandsfrei lösbaren Klebestreifen. Die Befestigungsplatte 31 weist an einer ihrer Längsseiten eine Führungsnut 35 auf, die abgeschrägt ist (Fig. 9) und im auf der Tischplatte angebrachten Zustand eine Hinterschneidung bildet. Ferner weist die Befestigungsplatte eine im wesentlichen rechteckige Ausnehmung 39 auf, die zur Aufnahme eines in Fig. 10 bis 12 dargestellten Sicherungselements dient und mit Halterungsnuten 33 und Halterungsausnehmungen 34 versehen ist.

Das in Fig. 10 bis 12 dargestellte Sicherungselement 40 besteht im wesentlichen aus drei Abschnitten und ist im vorliegenden Beispiel einteilig aus Kunststoff hergestellt. Ein Halterungsabschnitt 42 ist in den Halterungsausnehmungen 34 der Befestigungsplatte aufnehmbar und ist über einen Federabschnitt 43 mit einem Kopfabschnitt 44 verbunden, der seitliche Führungsvorsprünge 45 zur Aufnahme und Führung in den Halterungsnuten 33 der Befestigungsplatte aufweist und an seinem vorderen Endabschnitt mit einer der Führungsnut 35 der Befestigungsplatte entsprechenden Führungsnut 46 versehen ist. Auch die Führungsnut 46 bildet, wenn das Sicherungselement 40 in die Ausnehmung 39 der Befestigungsplatte eingesetzt ist, mit der Oberfläche der Tischplatte eine Hinterschneidung (Fig. 9, 12). Nach Einsetzen des Sicherungselements 40 in die Ausnehmung 39 der Befestigungsplatte 31, wobei der Halterungsabschnitt 42 in den entsprechenden Halterungsausnehmungen 34 sitzt, ist somit der Kopfabschnitt 44 in der durch die Halterungsnut 33 gebildeten Führung verschieblich und federbelastet, so daß der gegenseitige Abstand der Führungsnuten 35 und 46 veränderbar ist.

Fig. 13 zeigt in einer stirnseitigen Seitenansicht, teilweise im Schnitt, die Anbringung einer im übrigen entsprechend der ersten Ausführungsform ausgeführten Tischsteckdose bzw. des Gehäuses mittels einer Befestigungseinrichtung nach Fig. 7 bis 12. Die Befestigungsplatte 31 ist mit lösbarem, doppelseitig klebendem Klebeband auf der Oberfläche der Tischplatte 2 fixiert, wobei das Sicherungselement 40 zwischen Befestigungsplatte und Tischplatte gehalten und geführt ist. Führungsnuten 35, 46 und Führungsschienen 3 des Gehäuses bilden eine schwalbenschwanzartige Führung bzw. Befestigung, wobei aufgrund der federbelasteten Führung des Kopfabschnitts 44 des Sicherungselements 40 das Gehäuse lösbar aufrastbar ist. Hierzu wird das Gehäuse bzw. dessen eine Führungsschiene 3 in Zusammenwirken mit der Führungsnut 46 des Kopfabschnitts 44 gebracht und gegen die Federkraft des Federabschnitts 43 in Richtung auf die andere Führungsnut 35 gedrückt, bis die zweite Führungsschiene 3 des Gehäuses in bzw. unter die Führungsnut 46 der Befestigungsplatte eingerastet werden kann. Nach Freigeben des Gehäuses drückt die Federkraft des Federabschnitts 43 den Kopfabschnitt 44 zurück, so daß das Gehäuse fest, aber lösbar an der Befestigungsplatte gehalten ist. Das Abnehmen des Gehäuses erfolgt in umgekehrter Reihenfolge.

Alternativ zu einer beschädigungsfreien Befestigung der Befestigungsplatte 31 mittels doppelseitigem Klebeband ist selbstverständlich auch eine Schraubbefestigung der Befestigungsplatte denkbar.

### Bezugszeichenliste

- 1: Gehäuse
- 2: Tischplatte
- 3: Führungsschiene
- 5: Befestigungshülse
- 5a: Außengewinde
- 6: Befestigungsmutter
- 7: Durchführungsöffnung
- 8: Kabel
- 9: Steckdose
- 11: Führungsnut
- 13: Öffnung
- 13a: Zierblende
- 13b: Kunststoffdeckel
- 15: Zugentlastungsteil
- 16: Klemmteil
- 17: Schraube
- 18: Schraube
- 19: Steckverbinder

- 31: Befestigungsplatte
- 32: Befestigungsbereich
- 33: Halterungsnut
- 34: Halterungsausnehmung
- 35: Führungsnut
- 36: Ausnehmung
- 37: Sicherungselement
- 42: Halterungsabschnitt
- 43: Federabschnitt
- 44: Kopfabschnitt
- 45: Führungsvorsprung

## Patentansprüche

1. Tischsteckdose mit einem an einer Tischplatte (2) oder sonstigen Arbeitsfläche lösbar anzubringenden Gehäuse (1), in dem wenigstens eine Netz- und/oder Datensteckdose (9), insbesondere für Computer oder Telefon, angeordnet ist, **dadurch gekennzeichnet, daß** das Gehäuse (1) an einer an beliebiger Stelle der Tischplatte (2) oder Arbeitsfläche lösbar anbringbaren Befestigungseinrichtung (5, 6; 31, 40) lösbar gehalten ist.

2. Tischsteckdose nach Anspruch 1, **dadurch gekennzeichnet, daß** das Gehäuse (1) mittels einer damit formschlüssig verbindbaren, eine Durchgangsöffnung (7) für Kabel (8) aufweisenden, mit Außengewinde (5a) versehenen und durch eine Öffnung (13) in der Tischplatte (2) greifenden Befestigungshülse (5) und einer damit zusammenwirkenden Befestigungsmutter (6) lösbar an der Tischplatte (2) anbringbar ist.

3. Tischsteckdose nach Anspruch 1, **dadurch gekennzeichnet, daß** das Gehäuse (1) mittels einer Schwalbenschwanzführung mit der Befestigungshülse (5) verbunden ist, wobei das Gehäuse (1) zwei parallele, beabstandete Führungsschienen (3) und die Befestigungshülse (5) an einem Endabschnitt zwei parallele, beabstandete Führungsnuten (11) zum Zusammenwirken mit den Führungsschienen (3) aufweist, so daß das Gehäuse quer zur Längsachse der Befestigungshülse verschieblich ist.

4. Tischsteckdose nach Anspruch 1 oder 2, **dadurch gekennzeichnet, daß** die Anordnung so ist, daß das Gehäuse (1) bei festgezogener Befestigungsmutter (6) mit seiner Unterseite fest gegen die Tischplatte (2) anliegt.

5. Tischsteckdose nach einem der vorangehenden Ansprüche, **dadurch gekennzeichnet, daß** an einem Endabschnitt der Befestigungshülse (5) eine Zugentlastung angeordnet ist, die eine Klemmeinrichtung (15, 16) zum Erfassen mindestens eines durch die Befestigungshülse (5) geführten Kabels (8) aufweist.

6. Tischsteckdose nach Anspruch 4, **dadurch gekennzeichnet, daß** die Zugentlastung mittels einer mit der Befestigungshülse (5) zusammenwirkenden Schraube (18) oder einem einrastenden Steckverbinder (19) an der Befestigungshülse gehalten ist.

7. Tischsteckdose nach Anspruch 5, **dadurch gekennzeichnet, daß** die Schraube (18) bzw. der Steckverbinder (19) mit der Befestigungshülse (5) und dem Gehäuse (1) zusammenwirkt, so daß das Gehäuse (1) an einer Bewegung relativ zu der Befestigungshülse (5) gehindert ist.

8. Tischsteckdose nach Anspruch 1, **dadurch gekennzeichnet, daß** die Befestigungseinrichtung (31, 40) mittels lösbarem doppelseitigem Klebeband oder Schrauben auf der Oberfläche der Tischplatte (2) oder Arbeitsfläche anbringbar ist.

9. Tischsteckdose nach Anspruch 8, **dadurch gekennzeichnet, daß** Gehäuse (1) und Befestigungseinrichtung (31, 40) jeweils komplementäre, formschlüssig zusammenwirkende Befestigungsmittel aufweisen.

10. Tischsteckdose nach Anspruch 8 oder 9, **dadurch gekennzeichnet, daß** das Gehäuse zwei parallele, beabstandete Führungsschienen (3) zum Zusammenwirken mit parallelen, beabstandeten Führungsnuten (35, 46) der Befestigungseinrichtung (31, 40) aufweist.

11. Tischsteckdose nach einem der Ansprüche 8 bis 10, **dadurch gekennzeichnet, daß** die Befestigungseinrichtung als ebene Befestigungsplatte (31) mit abgeschrägten, jeweils eine Hinterschneidung bildenden Führungsnuten (35, 46) ausgebildet ist, wobei die Führungsschienen (3) des Gehäuses (1) entsprechend abgeschrägt sind und Hinterschneidungen bilden, so daß eine schwalbenschwanzartige Führung gebildet wird.

12. Tischsteckdose nach einem der Ansprüche 8 bis 11, **dadurch gekennzeichnet, daß** die Befestigungseinrichtung ein quer zur Längsrichtung der Führungsnuten (35, 46) bewegliches Sicherungselement (40) aufweist.

13. Tischsteckdose nach Anspruch 12, **dadurch gekennzeichnet, daß** das Sicherungselement (40) eine Führungsnut (46) bildet oder trägt und federbelastet ist, so daß das Gehäuse (1) auf die Befestigungseinrichtung (31, 40) aufrastbar und im aufgerasteten Zustand gesichert ist.

14. Tischsteckdose nach Anspruch 12 oder 13, **dadurch gekennzeichnet, daß** das Sicherungselement (40) in einer Ausnehmung (39) der Befestigungsplatte (31) geführt ist.

15. Tischsteckdose nach einem der Ansprüche 12 bis 14, **dadurch gekennzeichnet, daß** das Sicherungselement (40) mit einem Federabschnitt (43) einstückig aus Kunststoff ausgebildet ist.

16. Tischsteckdose nach einem der vorangehenden Ansprüche, **dadurch gekennzeichnet, daß** das Gehäuse (1) im angebrachten Zustand die Befestigungseinrichtung (5, 6; 31, 40) zumindest im wesentlichen abdeckt.

17. Tischsteckdose nach einem der vorangehenden Ansprüche, **gekennzeichnet durch** einen Gesamtschalter zum Schalten der gesamten Tischsteckdose und/oder wenigstens einen Einzelschalter zum Schalten einzelner Steckdosen.

18. Tischsteckdose nach einem der vorangehenden Ansprüche, **gekennzeichnet durch** elektrische Sicherungen und/oder Fehlerstromschutzschalter.
